# EUROPÄISCHE PATENTANMELDUNG

(11) **EP 1 205 780 A1**
(43) Veröffentlichungstag der Anmeldung: **15.05.2002**
(21) Anmeldenummer: 01125615.3
(22) Anmeldetag: 26.10.2001
(51) Int. Cl.: G02B 21/24, G02B 7/16

(54) **Mikroskop**

(30) Priorität: 09.11.2000 DE 10055534
(71) Anmelder: Leica Microsystems Wetzlar GmbH, 35578 Wetzlar (DE)
(72) Erfinder: Stenzel, Rüdiger, Dr., 57271 Hilchenbach (DE)
(74) Vertreter: Reichert, Werner F., Dr.

(57) **Zusammenfassung**

Ein Mikroskop mit einem Stativ (3) und einem an dem Stativ (3) drehbar angelenkten Revolver (1), wobei der Revolver (1) mindestens zwei Aufnahmen (4) für jeweils ein Objektiv (2) aufweist und wobei durch die Drehung des Revolvers (1) ein Objektiv (2) in einen Strahlengang (5) des Mikroskops verbringbar ist, ist im Hinblick auf eine einfache Zuordnung eines Objektivs (2) zu seiner Position im Strahlengang (5) des Mikroskops derart ausgestaltet, dass dem Objektiv (2) oder den Objektiven (2) jeweils ein Transponder (6) und dem Stativ (3) eine Leseeinrichtung (7) zur Kommunikation mit dem Transponder (6) zugeordnet ist.

## Beschreibung

Die Erfindung betrifft ein Mikroskop mit einem Stativ und einem an dem Stativ drehbar angelenkten Revolver, wobei der Revolver mindestens zwei Aufnahmen für jeweils ein Objektiv aufweist und wobei durch die Drehung des Revolvers ein Objektiv in einen Strahlengang des Mikroskops verbringbar ist.

Ein Mikroskop der eingangs genannten Art ist beispielsweise aus der US 5 737 134 bekannt. Das Mikroskop weist ein Stativ und einen an dem Stativ drehbar angelenkten Revolver auf. Der Revolver weist fünf Aufnahmen für jeweils ein Objektiv auf. Durch Drehung des Revolvers ist jeweils ein Objektiv in den Strahlengang des Mikroskops verbringbar.

Bei dem bekannten Mikroskop erfolgt die Drehung des Revolvers und damit auch das Einbringen des gewünschten Objektivs in den Strahlengang mittels eines elektrischen Antriebs. Insbesondere bei derartigen automatisierten Mikroskopen ist es von Bedeutung, dass bei diesem Einbringen der Objektive in den Strahlengang kein Zuordnungsfehler auftritt. Es ist sicherzustellen, dass exakt das gewünschte Objektiv in den Strahlengang eingebracht ist. Von dieser exakten Zuordnung können beispielsweise die Einstellung der Beleuchtungslichtstärke und die Positionierung eines Objekttischs abhängen.

Bei dem bekannten Mikroskop kann die Drehposition des Revolvers über eine magnetische Codierung festgestellt werden, wobei jede festgestellte Drehposition des Revolvers einem bestimmten Objektiv im Strahlengang des Mikroskops entspricht. Hierzu weist der Revolver spezifische Aufnahmen für spezifische Objektive auf, so dass insgesamt detektierbar ist, welches Objektiv sich gerade im Strahlengang befindet.

Da bei dem bekannten Mikroskop sowohl der Revolver eine magnetische Codierung aufweisen muß als auch die Aufnahmen des Revolvers für unterschiedliche Objektive spezifisch ausgestaltet sein müssen, ist die Detektion bzw. Feststellung des in den Strahlengang eingebrachten oder einzubringenden Objektivs äußerst aufwendig.

Der vorliegenden Erfindung liegt daher die Aufgabe zugrunde, ein Mikroskop der eingangs genannten Art derart auszugestalten und weiterzubilden, dass eine einfache Zuordnung eines Objektivs zu seiner Position im Strahlengang des Mikroskops ermöglicht ist.

Erfindungsgemäß wird die voranstehende Aufgabe durch ein Mikroskop mit den Merkmalen des Patentanspruchs 1 gelöst. Danach ist das Mikroskop der eingangs genannten Art derart ausgebildet, dass dem Objektiv oder den Objektiven jeweils ein Transponder und dem Stativ eine Leseeinrichtung zur Kommunikation mit dem Transponder zugeordnet ist.

In erfindungsgemäßer Weise ist erkannt worden, dass die Verwendung eines dem Objektiv oder den Objektiven zugeordneten Transponders in Verbindung mit einer dem Stativ zugeordneten Leseeinrichtung die obige Aufgabe auf überraschend einfache Weise löst. Hierbei muss lediglich dem Objektiv ein Transponder und dem Stativ eine Leseeinrichtung zugeordnet werden. Dabei muss der Revolver nicht mehr mit einer Codierung und auch nicht mehr mit speziellen, objektivspezifischen Aufnahmen versehen werden. Durch geeignete Anordnung der Leseeinrichtung kann auf einfache Weise festgestellt werden, ob sich das gewünschte Objektiv in der durch den Ort der Leseeinrichtung vorgegebenen Position befindet.

Folglich ist mit dem erfindungsgemäßen Mikroskop ein Mikroskop angegeben, bei dem eine einfache Zuordnung eines Objektivs zu seiner Position im Strahlengang des Mikroskops ermöglicht ist.

Bei einer konkreten Ausführung könnte der Transponder am Gehäuse des Objektivs oder der Objektive angeordnet sein. Dabei ist die Anordnung des Transponders am Gehäuse des Objektivs oder der Objektive derart zu wählen, dass im in den Revolver eingebauten Zustand des Objektivs eine sichere Kommunikation mit der Leseeinrichtung erfolgen kann.

In der Praxis hat sich gezeigt, dass es besonders günstig ist, den Transponder auf der Oberseite der Streulichtblende des Objektivs oder der Objektive anzuordnen. Hierbei ist eine Störung der Verwendung des Objektivs durch den Transponder vermieden und gleichzeitig eine sichere Anordnung des Transponders erreicht.

Hinsichtlich einer besonders sicheren Anordnung des Transponders könnte die Streulichtblende eine vorzugsweise seitliche Ausnehmung aufweisen. Eine derartige Ausnehmung könnte in besonders einfacher Weise durch eine Ausfräsung gebildet sein. Nach dem Einschrauben des Objektivs in den Revolver entsteht zwischen der Ausnehmung und dem Revolver eine Art Tasche, die den Transponder aufnehmen könnte.

Hinsichtlich einer sicheren Kommunikation mit der Leseeinrichtung könnte der Transponder eine Antenne oder Antennenspule aufweisen. Im Konkreten könnte die Antenne oder Antennenspule auf dem Schraubring des Objektivs oder der Objektive angeordnet sein.

Die Antenne oder Antennenspule könnte des Weiteren direkt an dem Transponder befestigt sein. Dabei könnte der Transponder an die Antenne oder Antennenspule gebondet oder gelötet sein. Durch die Bondung zwischen Transponder und Antenne könnte ein höherer Miniaturisierungsgrad erreicht werden.

Alternativ oder zusätzlich hierzu könnten der Transponder und die Antenne oder Antennenspule in einem gemeinsamen Gehäuse angeordnet sein. Der Transponder könnte als reiner Lese-Transponder oder als kombinierter Schreib-Lese-Transponder ausgeführt sein. Insoweit wäre es denkbar, dass der Transponder vorgegebene Codeinformationen aussendet oder mit Codeinformationen belegbar ist, die er nach entsprechender Belegung und nach Aktivierung aussenden kann. Dabei lassen sich sämtliche Varianten handelsüblicher Transponder in erfindungsgemäßer Weise verwenden.

Im Hinblick auf eine sichere Aktivierung des Transponders durch die Leseeinrichtung könnte der Leseeinrichtung eine Erregerspule zugeordnet sein. Aus der Sendeenergie der Leseeinrichtung könnte der Transponder seine Sendeenergie beziehen. In diesem Fall wäre eine eigene Stromversogung des Transponders nicht erforderlich.

Die Leseeinrichtung könnte in besonders einfacher Weise an dem Stativ an einer geeigneten Stelle befestigt sein. In besonders wirkungsvoller Weise könnte die Leseeinrichtung in dem Revolver angeordnet sein. Damit wäre eine besonders sichere Kommunikation zwischen dem Transponder und der Leseeinrichtung realisiert.

Im Konkreten könnte die Leseeinrichtung eine Leseantenne und eine Ausleseelektronik aufweisen. Zumindest die Leseantenne könnte an dem Stativ befestigt und/oder in dem Revolver angeordnet sein. Im Konkreten hat sich eine Anordnung der Leseantenne um die optische Achse des Mikroskops herum als besonders günstig gezeigt.

Die Ausleseelektronik könnte in dem Revolver angeordnet oder in den Revolver integriert sein. Alternativ hierzu könnte die Ausleseelektronik auch von dem Revolver entfernt und gegebenenfalls separat von dem Mikroskop angeordnet sein.

Im Hinblick auf eine besonders vielseitige Verwendung der Anordnung aus Transponder und Leseeinrichtung könnte die Leseeinrichtung zusätzlich eine Schreibeinheit aufweisen. Damit wäre die Leseeinrichtung eine quasi kombinierte Schreib-Lese-Einheit. Hierdurch könnten unterschiedlichste Informationen im Transponder abgespeichert und ausgelesen werden.

Im Konkreten könnte in dem Transponder der Vergrößerungsgrad und/oder der Typ des jeweiligen Objektivs abgespeichert sein. Alternativ oder zusätzlich hierzu könnte in dem Transponder der Korrektionsgrad des Objektivs oder der Objektive, die Abgleichlänge und/oder der Farbgang abgespeichert sein. Weiter alternativ oder zusätzlich könnte in dem Transponder die Wellenlänge und/oder Linienbreiten von Filtern oder Filtersystemen abgespeichert sein. Außerdem könnten in dem Transponder Auslieferungsdaten, Chargennummern und/oder Wartungs- oder Reparaturdaten abgespeichert sein. Hinsichtlich der abgespeicherten Daten sind keinerlei Grenzen gesetzt. Hinsichtlich der Abspeicherung ist auf den jeweiligen Anwendungsfall abzustellen.

Ganz allgemein könnte der Transponder als Bestandteil des Objektivs oder als Zubehör zum Nachrüsten eines oder mehrerer Objektive vorgesehen sein.

Die Datenübertragung erfolgt bei einem Transponder über Schwingungen. In dem Transponder könnte im Konkreten ein Mikrochip vorgesehen sein. Über die Leseeinrichtung sind die in dem Transponder abgespeicherten Daten berührungslos in einen Computer zur Weiterverarbeitung übertragbar. Der Transponder löst dabei den Lesevorgang quasi eigenständig aus, sobald er in Reichweite der Leseeinrichtung ist.

Als Transponder werden häufig drahtlose Datenübertragungssysteme mit Näherungsschalterfunktion bezeichnet, die aus zwei Sender/Empfängereinheiten bestehen, von denen mindestens eine mobil ist. Die eine mobile Einheit weist in der Regel keine eigene Stromversorgung auf, sondern bezieht ihre Sendeenergie - gegebenenfalls für die Rückantwort - aus der Sendeenergie der stationären Einheit. Charakteristisch ist dabei die Auslösung eines bestimmten Signals oder Vorgangs - beispielsweise Warnsignal oder Türöffnung -, wenn sich der Träger der mobilen Einheit - beispielsweise eine Person - mit einer Scheckkarte oder einem Gegenstand - beispielsweise ein Bekleidungsstück mit Sicherungsplakette - der stationären Einheit auf eine bestimmte Entfernung von maximal einigen Metern nähert. Im einfachsten Fall wird als Information nicht einmal ein Ja-/Neinsignal übertragen, sondern es wird geprüft, ob dem stationären Sender durch die mobile Einheit beispielsweise mit einem LC-Schwingkreis viel oder wenig Energie entzogen wird. Wenn viel Energie entzogen wird, d. h., wenn ein starker Resonanzeffekt vorhanden ist, da die mobile Einheit in der Nähe ist, wird ein Schaltsignal in der stationären Einheit erzeugt. Dabei spricht man von einer Näherungsschalterfunktion.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer Seitenansicht, schematisch, das Ausführungsbeispiel des erfindungsgemäßen Mikroskops, wobei der Einfachheit halber nur der Bereich des Revolvers mit einem eingeschraubten Objektiv gezeigt ist, und
- Fig. 2: in einer geschnittenen Darstellung im oberen Bereich der Fig. die Leseantenne der Leseeinrichtung und im unteren Bereich der Fig. in einer Draufsicht und in einer geschnittenen Darstellung den Transponder mit zugehöriger Antenne auf dem Schraubring des Objektivs aus Fig. 1.

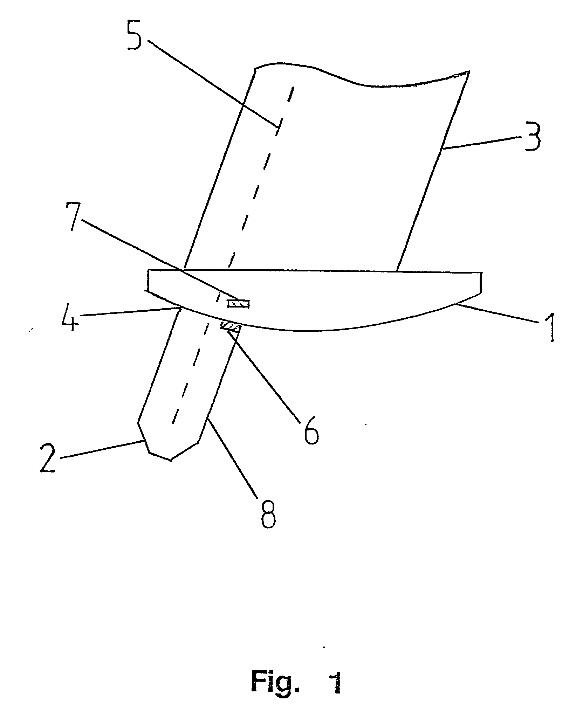

Fig. 1 zeigt in einer schematischen Seitenansicht das Ausführungsbeispiel des erfindungsgemäßen Mikroskops, wobei der Einfachheit halber nur der Bereich des Revolvers 1 mit einem eingeschraubten Objektiv 2 gezeigt ist. Des Weiteren ist das Stativ 3 des Mikroskops teilweise dargestellt, wobei der Revolver 1 an dem Stativ 3 drehbar angelenkt ist. Der Revolver 1 weist mindestens zwei Aufnahmen 4 für jeweils ein Objektiv 2 auf. Durch die Drehung des Revolvers 1 ist ein Objektiv 2 in einen Strahlengang 5 des Mikroskops verbringbar. Im Hinblick auf eine einfache Zuordnung eines Objektivs 2 zu seiner Position im Strahlengang 5 des Mikroskops ist dem Objektiv 2 oder den Objektiven 2 jeweils ein Transponder 6 und dem Stativ 3 eine Leseeinrichtung 7 zur Kommunikation mit dem Transponder 6 zugeordnet.

Genauer gesagt ist der Transponder 6 am Gehäuse 8 des Objektivs 2 angeordnet. Noch präziser gesagt ist der Transponder 6 auf der Oberseite der Streulichtblende des Objektivs 2 angeordnet. Hierzu weist die Streulichtblende eine vorzugsweise seitliche Ausnehmung auf.

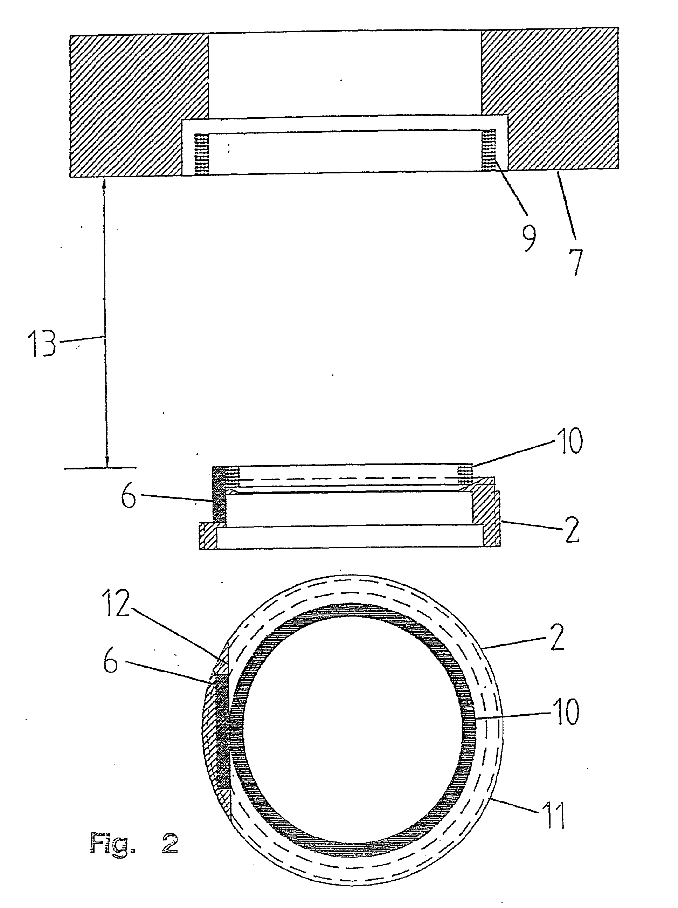

Fig. 2 zeigt im oberen Bereich der Fig. in einer geschnittenen Darstellung die Leseeinrichtung 7 mit ihrer Leseantenne 9. Im unteren Bereich der Fig. 2 ist der Transponder 6 mit der zugehörigen Antenne 10 dargestellt, die auf dem Schraubring des Objektivs 2 angeordnet ist. Genauer gesagt ist die Antenne 10 auf der Streulichtblende 11 des Objektivs 2 angeordnet. Der Transponder ist in einer ausgefrästen Ausnehmung 12 angeordnet.

Die Leseantenne 9 wird im Revolver 1 um die optische Achse herum montiert. Sowohl die Leseantenne 9 der Leseeinrichtung 7 als auch die Antenne 10 des Transponders 6 sind als Spulen ausgeführt.

Im unteren Bereich der Fig. 2 ist des Weiteren der obere Teil des Objektivs 2 in einer geschnittenen Darstellung gezeigt.

Der Doppelpfeil 13 gibt den Leseabstand zwischen Leseantenne 9 und dem Transponder 6 an. Der Leseabstand könnte 7 bis 9 mm betragen.

Hinsichtlich weiterer vorteilhafter Ausgestaltungen und Weiterbildungen der erfindungsgemäßen Lehre wird zur Vermeidung von Wiederholungen einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

### Bezugszeichenliste

- 1: Revolver
- 2: Objektiv
- 3: Stativ
- 4: Aufnahme
- 5: Strahlengang
- 6: Transponder
- 7: Leseeinrichtung
- 8: Gehäuse
- 9: Leseantenne
- 10: Antenne
- 11: Streulichtblende
- 12: Ausnehmung
- 13: Doppelpfeil

## Patentansprüche

1. Mikroskop mit einem Stativ (3) und einem an dem Stativ (3) drehbar angelenkten Revolver (1), wobei der Revolver (1) mindestens zwei Aufnahmen (4) für jeweils ein Objektiv (2) aufweist und wobei durch die Drehung des Revolvers (1) ein Objektiv (2) in einen Strahlengang (5) des Mikroskops verbringbar ist,
**dadurch gekennzeichnet, dass** dem Objektiv (2) oder den Objektiven (2) jeweils ein Transponder (6) und dem Stativ (3) eine Leseeinrichtung (7) zur Kommunikation mit dem Transponder (6) zugeordnet ist.

2. Mikroskop nach Anspruch 1, **dadurch gekennzeichnet, dass** der Transponder (6) am Gehäuse (8) des Objektivs (2) oder der Objektive (2) angeordnet ist.

3. Mikroskop nach Anspruch 1 oder 2, **dadurch gekennzeichnet, dass** der Transponder (6) auf der Oberseite der Streulichtblende (11) des Objektivs (2) oder der Objektive (2) angeordnet ist.

4. Mikroskop nach Anspruch 3, **dadurch gekennzeichnet, dass** die Streulichtblende (11) eine vorzugsweise seitliche Ausnehmung (12) aufweist.

5. Mikroskop nach einem der Ansprüche 1 bis 4, **dadurch gekennzeichnet, dass** der Transponder (6) eine Antenne (10) oder Antennenspule aufweist und auf dem Schraubring des Objektivs (2) oder der Objektive (2) angeordnet ist.

6. Mikroskop nach Anspruch 5, **dadurch gekennzeichnet, dass** die Antenne (10) oder Antennenspule an dem Transponder (6) befestigt ist.

7. Mikroskop nach einem der Ansprüche 5 oder 6, **dadurch gekennzeichnet, dass** der Transponder und die Antenne oder Antennenspule in einem gemeinsamen Gehäuse angeordnet sind.

8. Mikroskop nach einem der Ansprüche 1 bis 7, **dadurch gekennzeichnet, dass** der Transponder als Lese- oder Schreib-Lese-Transponder ausgeführt ist.

9. Mikroskop nach einem der Ansprüche 1 bis 7, **dadurch gekennzeichnet, dass** der Transponder (6) als Transponder ausgeführt ist.

10. Mikroskop nach einem der Ansprüche 1 bis 9, **dadurch gekennzeichnet, dass** der Leseeinrichtung (7) eine Erregerspule zur Aktivierung des Transponders (6) zugeordnet ist.

11. Mikroskop nach einem der Ansprüche 1 bis 10, **dadurch gekennzeichnet, dass** die Leseeinrichtung (7) an dem Stativ (3) befestigt ist.

12. Mikroskop nach einem der Ansprüche 1 bis 11, **dadurch gekennzeichnet, dass** die Leseeinrichtung (7) in dem Revolver (1) angeordnet ist.

13. Mikroskop nach einem der Ansprüche 1 bis 12, **dadurch gekennzeichnet, dass** die Leseeinrichtung (7) eine Leseantenne (9) und eine Ausleseelektronik aufweist.

14. Mikroskop nach Anspruch 13, **dadurch gekennzeichnet, dass** die Leseantenne (9) an dem Stativ (3) befestigt und/oder in dem Revolver (1) angeordnet ist.

15. Mikroskop nach Anspruch 13 oder 14, **dadurch gekennzeichnet, dass** die Leseantenne (9) um die optische Achse herum angeordnet ist.

16. Mikroskop nach einem der Anspruch 13 bis 15, **dadurch gekennzeichnet, dass** die Ausleseelektronik in dem Revolver (1) angeordnet oder in den Revolver (1) integriert ist.

17. Mikroskop nach einem der Ansprüche 1 bis 16, **dadurch gekennzeichnet, dass** in dem Transponder (6) der Vergrößerungsgrad und/oder der Typ des jeweiligen Objektivs (2) abgespeichert ist.

18. Mikroskop nach einem der Ansprüche 1 bis 17, **dadurch gekennzeichnet, dass** in dem Transponder (6) der Korrektionsgrad des Objektivs (2) oder der Objektive (2), die Abgleichlänge und/oder der Farbgang abgespeichert ist.

19. Mikroskop nach einem der Ansprüche 1 bis 18, **dadurch gekennzeichnet, dass** in dem Transponder (6) die Wellenlänge und/oder Linienbreiten von Filtern oder Filtersystemen abgespeichert sind.

20. Mikroskop nach einem der Ansprüche 1 bis 19, **dadurch gekennzeichnet, dass** in dem Transponder (6) Auslieferungsdaten, Chargennummern und/oder Wartungs- oder Reparaturdaten abgespeichert sind.
